# EUROPEAN PATENT APPLICATION

(11) **EP 4 586 358 A1**
(43) Date of publication of application: **16.07.2025**
(21) Application number: 22969786.7
(22) Date of filing: 30.12.2022
(51) Int. Cl.: H01M 10/0583, H01M 4/13

(54) **ELECTRODE ASSEMBLY AND MANUFACTURING METHOD THEREFOR, AND BATTERY CELL, BATTERY AND ELECTRIC DEVICE**

(71) Applicant: Contemporary Amperex Technology (Hong Kong) Limited, Central (HK)
(72) Inventor: LIAO, Ruhu, Ningde, Fujian 352100 (CN); ZENG, Gang, Ningde, Fujian 352100 (CN); WEI, Jingjing, Ningde, Fujian 352100 (CN); DAI, Ya, Ningde, Fujian 352100 (CN); WANG, Jianlei, Ningde, Fujian 352100 (CN); CAI, Quanshui, Ningde, Fujian 352100 (CN)
(74) Representative: Ran, Handong
(86) International application number: PCT/CN2022/143969
(87) International publication number: WO 2024/138643

(57) **Abstract**

An electrode assembly (10) and a manufacturing method therefor, and a battery cell (100), a battery (200) and an electric device. The electrode assembly (10) comprises: first electrode sheets (1) and at least two second electrode sheets (2), wherein the first electrode sheets (1) and the at least two second electrode sheets (2) are arranged in a stacked manner and are bent to form at least one bent portion (S); the bent portion (S) comprises at least one bent section (S2) and at least two straight sections (S1); two adjacent straight sections (S 1) are connected by means of the bent section (S2); one first electrode sheet (1) is arranged between the two adjacent straight sections (S1); and the polarity of the first electrode sheets (1) is opposite to that of the adjacent second electrode sheets (2).

## Description

### TECHNICAL FIELD

The present application relates to the technical field of batteries, and in particular, to an electrode assembly and a manufacturing method thereof, a battery cell, a battery, and an electrical apparatus.

### BACKGROUND

Due to the advantages of high energy density, high power density, large number of cycles, long storage time, and the like, lithium-ion batteries and other batteries are widely used in electrical apparatuses such as an electric automobile.

However, the production efficiency of electrode assemblies in battery cells is low at present, so how to improve the production efficiency of electrode assemblies has always been a problem that needs to be solved in the industry.

### SUMMARY OF THE INVENTION

The purpose of the present application is to improve the production efficiency of electrode assemblies.

According to a first aspect, the present application provides an electrode assembly, comprising:
a first electrode plate; and
at least two second electrode plates stacked and bent to form at least one bent portion, the bent portion comprising at least one bent section and at least two straight sections, two adjacent straight sections being connected through the bent section,
where for each bent portion, the first electrode plate is provided between two adjacent straight sections, and the polarity of the first electrode plate is opposite to the polarity of the adjacent second electrode plates.

For the electrode assembly in the present application, by changing the forming structure, three or more electrode plates can be obtained at each time of folding. For electrode assemblies with the same thickness, the number of folding times can be reduced, thus improving the stacking efficiency and shortening the production cycle of the electrode assembly. In addition, since the number of the second electrode plates is increased, the number of the first electrode plates is reduced, thus reducing the number of cut edges in all electrode plates, and reducing the risk of cutting burrs and powder falling from the edges of the electrode plates. Moreover, the increase in the number of the second electrode plates increases the bending radius of the bent section, thus reducing the risk of fracture and powder falling when the second electrode plates are bent, and improving the performance of the electrode assembly.

In some embodiments, the electrode assembly further comprises at least three spacers stacked and bent together with the at least two second electrode plates to form the at least one bent portion.

In this embodiment of the present application, by increasing the number of layers of the spacers, the adhesive force of the spacers to the second electrode plates increases, so that relative displacement between the spacers and the second electrode plates is less likely to occur in the bending process of the first composite electrode, the shape of the electrode assembly can be maintained in the stacking process, and it is easier to compact and shape the electrode assembly through hot or cold pressing after folding, thus shortening the time for shaping the electrode assembly, and improving the shaping efficiency of the electrode assembly.

In some embodiments, at least one of the second electrode plates and the spacers is continuous.

In this embodiment, a continuous first composite electrode plate can be formed and the first composite electrode plate can be conveniently bent, thus facilitating the formation of a stacked type electrode assembly, and improving the forming efficiency of the electrode assembly.

In some embodiments, the second electrode plates and the spacers are both continuous.

In this embodiment, the second electrode plates and the spacers are both provided as continuous structures, thus improving the efficiency of forming the first composite electrode plate by compounding, making it easier to align the spacers with the second electrode plates during stacking, and improving the production efficiency and performance of the electrode assembly.

In some embodiments, the second electrode plate is provided between every two adjacent spacers.

This embodiment can maximize the number of second electrode plates in a case that the number of spacers is fixed, thus reducing the number of folding times and improving the stacking efficiency. In addition, since the number of the second electrode plates increases, the number of the first electrode plates is reduced, thus reducing the number of cut edges in all electrode plates, and reducing the risk of cutting burrs and powder falling from the edges of the electrode plates. Moreover, the bending radius of the bent section is increased, thus reducing the risk of fracture and powder falling when the second electrode plates are bent, and improving the performance of the electrode assembly.

In some embodiments, each spacer is provided with a bonding layer, and the first electrode plate is attached to the spacer located on an outer side of the at least three spacers through the bonding layer; and/or the second electrode plate is attached to the spacer through the bonding layer.

In this embodiment, the compounding with the first electrode plate and/or second electrode plate can be achieved through the bonding layer on the side surface of the spacer, thus conveniently forming the composite electrode plate for folding, maintaining the position between adjacent electrode plates, preventing displacement between adjacent electrode plates, and improving the performance of the electrode assembly.

In some embodiments, the polarities of every two adjacent second electrode plates are opposite.

In this embodiment, by making the polarities of every two adjacent second electrode plates opposite, lithium ions can be deintercalated from the second electrode plate with one polarity and be directly intercalated into the adjacent second electrode plate with the other polarity after passing through the electrolyte, thus optimizing the charging and discharging performance of the electrode assembly.

In some embodiments, the number of the second electrode plates is even, the number of the second electrode plates with a first polarity is equal to the number of the second electrode plates with a second polarity, and the first polarity is opposite to the second polarity.

In this embodiment, the number of the second electrode plates with opposite polarities are enabled to be equal, thus making the positive and negative electrode plates evenly distributed along the stacking direction after at least two second electrode plates are bent. Moreover, the number of first tabs and second tabs with opposite polarities led out from the at least two second electrode plates is close to each other, making it easy to ensure the alignment of tabs with the same polarity.

In some embodiments, multiple first electrode plates are provided, the multiple first electrode plates have a first polarity and a second polarity, and the multiple first electrode plates with the first polarity and the second polarity are alternately arranged along a stacking direction of at least two straight sections.

In this embodiment, since the number of layers of electrode plates with two polarities formed by bending at least two second electrode plates is equal, multiple first electrode plates have two polarities, and the multiple first electrode plates with the two polarities are alternately arranged along the stacking direction, all electrode plates with the first polarity and the second polarity in the electrode assembly can be alternately arranged along the stacking direction, thus optimizing the charging and discharging performance of the electrode assembly.

In some embodiments, the number of the second electrode plates is odd, the number of the second electrode plates with a first polarity is greater than the number of the second electrode plates with a second polarity, multiple first electrode plates are provided, and all of the multiple first electrode plates have the second polarity.

In this embodiment, by setting the number of the second electrode plates to be odd, the total number of the second electrode plates can be increased in a case that the number of the second electrode plates which are fewer is fixed, the number of folding times can be further reduced when the total length of the electrode plates is fixed, thus improving the stacking efficiency, reducing the number of cut edges in all electrode plates, and reducing the risk of cutting burrs and powder falling from the edges of the electrode plates. Moreover, the bending radius of the bent section is increased, thus reducing the risk of fracture and powder falling when the second electrode plates are bent, and improving the performance of the electrode assembly. In addition, although the number of layers of electrode plates with two polarities formed by bending all second electrode plates is different, by making all first electrode plates have the same polarity as the second electrode plates which are fewer, all electrode plates with the first polarity and the second polarity in the electrode assembly can still be alternately arranged along the stacking direction, thus optimizing the charging and discharging performance of the electrode assembly.

In some embodiments, an end portion of the first electrode plate along an opening direction of the bent portion does not exceed the straight sections.

This embodiment can make the straight sections stably support the first electrode plate, prevent the edges of the first electrode plate from warping and deforming, make the electrode assembly flatter after being compacted, and prevent the active material from falling when the first electrode plate is pressed against the inner side surface of the bent portion, thus ensuring the performance of the electrode assembly.

In some embodiments, at least one of the second electrode plates is provided with a material removal region at the bent section, and the material removal region extends along a width direction of the second electrode plate.

In this embodiment, since the second electrode plate is provided with the material removal region at the bent section, the second electrode plate can be guided to bend accurately along the material removal region, thus reducing the difficulty in bending, reducing the displacement of two adjacent layers of electrode plates in the electrode assembly after stacking, and enabling the battery to have good electrochemical performance.

In some embodiments, at least three second electrode plates are provided, and the material removal region is arranged on the second electrode plate sandwiched between inner sides.

In this embodiment, by arranging the material removal region on the second electrode plate sandwiched between the inner sides, when powder falling occurs at the position of the material removal region, the falling active material can be sandwiched in the middle and is not easily dropped outward, thus preventing a short circuit from occurring in the electrode assembly during operation, and ensuring the electrochemical performance of the electrode assembly.

In some embodiments, the material removal region comprises grooves, and the grooves extend along the width direction.

In this embodiment, the grooves are provided as the material removal region, thus facilitating the manufacturing; the grooves extend along the width direction, thus achieving a better effect of guiding the bending of the second electrode plates; moreover, the grooves can achieve a smaller width during manufacturing, thus improving the accuracy of the bending position.

In some embodiments, two sides of the second electrode plate are provided with the grooves opposite to each other.

In this embodiment, by providing the grooves opposite to each other in two sides of the second electrode plate, the depth of the groove on each side can be reduced in a case that the strength of the bent section is fixed, so that the stress on the inner and outer sides of the second electrode plate at the bent section is more balanced, thus reducing the risk of fracture in the second electrode plate.

In some embodiments, the second electrode plate comprises a second current collector and a second active material layer, the second active material layer is arranged on the second current collector, the second active material layer comprises multiple active material regions spaced apart, and the grooves are formed between every two adjacent active material regions.

In this embodiment, the depth of each groove is equal to the thickness of the second active material layer. When the grooves are formed, the second current collector is not influenced and the grooves can be directly formed in the process of coating to form the second active material layer, thus eliminating the need for subsequent manufacturing to form the grooves, and improving the production efficiency of the second electrode plates.

In some embodiments, the material removal region comprises multiple through holes, and the multiple through holes are spaced apart along the width direction.

In this embodiment, by providing the multiple through holes to form the material removal region, since the thickness of the second electrode plates is small, this structure does not require precise control of the depth of the grooves, thus reducing the requirement on the manufacturing accuracy; moreover, the through holes can greatly weaken the strength of the second electrode plates, thus facilitating the bending.

In some embodiments, the second electrode plate with the material removal region is a positive electrode plate.

In this embodiment, after the electrode assembly is formed, it can be ensured that the edge of the active material layer of the negative electrode plate exceeds the edge of the active material layer of the positive electrode plate, thus meeting the requirement of overhang, preventing lithium plating, and ensuring the performance of the electrode assembly.

According to a second aspect, the present application provides a battery cell, comprising the electrode assembly in the embodiment described above.

According to a third aspect, the present application provides a battery, comprising the battery cell in the embodiment described above.

According to a fourth aspect, the present application provides an electrical apparatus, comprising the battery cell and/or the battery in the embodiment described, configured to supply electric energy for the electrical apparatus.

According to a fifth aspect, the present application provides a manufacturing method of an electrode assembly, comprising:
a first compounding step: compounding at least two second electrode plates with at least three spacers to form a first composite electrode plate;
a second compounding step: compounding multiple first electrode plates with the outermost two spacers of the first composite electrode plate, where the polarity of the first electrode plates is opposite to the polarity of the adjacent second electrode plates; and
a bending step: bending the first composite electrode plate to form at least one bent portion, where the bent portion comprises at least one bent section and at least two straight sections, two adjacent straight sections are connected through the bent section, and the first electrode plate is provided between the two adjacent straight sections.

For the electrode assembly in the present application, by changing the forming method and performing bending after compounding at least two second electrode plates, three or more electrode plates can be obtained at each time of folding. For electrode assemblies with the same thickness, the number of folding times can be reduced, thus improving the stacking efficiency and shortening the production cycle of the electrode assembly. In addition, since the number of the second electrode plates is increased, the number of the first electrode plates is reduced, thus reducing the number of cut edges in all electrode plates, and reducing the risk of cutting burrs and powder falling from the edges of the electrode plates. Moreover, the increase in the number of the second electrode plates increases the bending radius of the bent section, thus reducing the risk of fracture and powder falling when the second electrode plates are bent, and improving the performance of the electrode assembly.

In some embodiments, the first compounding step and the second compounding step are both performed through heating.

In this embodiment, by compounding through heating, the particles distributed in dots in the PCS layers on the two sides of the spacers can be more easily flattened, thus increasing the adhesive force to the first electrode plate or the second electrode plate, shortening the compounding time, and improving the compounding efficiency.

In some embodiments, the second compounding step is performed between the first compounding step and the bending step, the second compounding step forms a second composite electrode plate, and the second composite electrode plate is bent to form the at least one bent portion in the bending step.

In this embodiment, the first electrode plate is attached to the first composite electrode plate and then bent, which is suitable for the situation where the composite electrode plate can be freely stacked by its own weight to form the electrode assembly. This forming method can easily ensure the position of the first electrode plate, thus improving the accuracy of the position of each layer of electrode plates, and improving the performance of the electrode assembly.

In some embodiments, the second compounding step and the bending step are performed simultaneously, and the multiple first electrode plates are inserted between two adjacent straight sections of each bent portion in a bending process of the first composite electrode plate.

In this embodiment, during the process of stacking the first composite electrode plate, the sucked first electrode plates are alternately inserted between every two adjacent straight sections of each bent portion, which is suitable for the situation where the composite electrode plate is alternately folded left and right by a pressure cutter.

### DESCRIPTION OF DRAWINGS

In order to illustrate the technical solutions of the embodiments of the present application more clearly, the following briefly introduces the accompanying drawings required in the embodiments of the present application. Obviously, the accompanying drawings described below are only some embodiments of the present application. Those of ordinary skill in the art can also obtain other drawings according to the drawings without any creative work.
FIG. 1 is a schematic structural diagram of a battery mounted to a vehicle according to some embodiments of the present application.
FIG. 2 is an exploded diagram of a battery according to a first embodiment of the present application.
FIG. 3 is an outline diagram of a battery cell according to some embodiments of the present application.
FIG. 4 is an exploded diagram of an electrode assembly in a related art.
FIG. 5 is a side view of the electrode assembly shown in FIG. 4.
FIG. 6 is an exploded diagram of an electrode assembly according to a first embodiment of the present application.
FIG. 7 is a schematic diagram of a partial length section of the first composite electrode plate in FIG. 6.
FIG. 8 is a partial exploded diagram of the electrode assembly shown in FIG. 6.
FIG.. 9 is a side view of the electrode assembly shown in FIG. 6.
FIG. 10A and FIG. 10B are respectively schematic diagrams of a second electrode plate 2-2 and a first electrode plate 1-2 in an unfolded state.
FIG. 11A and FIG. 11B are respectively schematic diagrams of a second electrode plate 2-1 and a first electrode plate 1-1 in an unfolded state.
FIG. 12 is an exploded diagram of an electrode assembly according to a second embodiment of the present application.
FIG. 13 is a schematic diagram of a partial length section of the first composite electrode plate in FIG. 12.
FIG.. 14 is a side view of the electrode assembly shown in FIG. 12.
FIG. 15 is a schematic structural diagram of grooves provided as a material removal region in a second electrode plate.
FIG. 16 is a schematic structural diagram of grooves and through holes provided as a material removal region in a first electrode plate.
FIG. 17 is a flowchart of a manufacturing method of an electrode assembly according to some embodiments of the present application.

The drawings are not drawn according to the actual scale.

Descriptions of reference signs:
10'-electrode assembly; 1'-first electrode plate; 2'-second electrode plate; 3'-spacer;
100-battery cell; 101-case, 102-end cover; 103-electrode terminal;
10-electrode assembly; 10A-first composite electrode plate; 1-first electrode plate; 11-first current collector; 12-first active material layer; 12'-first insulating layer; 13-first tab; 14-second tab; 2-second electrode plate; 21-second current collector; 22-second active material layer; 221-active material region; 22'-second insulating layer; 23-material removal region; 231-groove; 232-through hole; 3-spacer; S-bent portion; S1-straight section; S2-bent section; X-opening direction; Y-width direction; Z-stacking direction;
200-battery; 201-box body assembly; 201A-box body; 201B-cover body;
300-vehicle; 301-axle; 302-wheel; 303-motor; 304-controller

### DETAILED DESCRIPTION

Embodiments of the present application are described in further detail below in conjunction with the drawings and embodiments. The following detailed description of the embodiments and the accompanying drawings are used to exemplarily explain the principles of the present application, but should not be configured to limit the scope of the present application, that is, the present application is not limited to the described embodiments.

In the descriptions of the embodiments of the present application, the term "multiple" refers to more than two (comprising two), and similarly, "multiple groups" refers to more than two groups (comprising two groups); and "multiple pieces" refers to more than two pieces (comprising two pieces).

The orientations or positional relationships indicated by the terms "upper", "lower", "top", "bottom", "front", "rear", "inner", "outer" and the like are used in the present application only for facilitating the description of the present application, rather than indicating or implying that the apparatus referred to needs to have a particular orientation or be constructed and operated in a particular orientation, and therefore they shall not be interpreted as limiting the protection scope of the present application.

In addition, the terms "first", "second", "third", and the like are only for the purpose of description, and may not be understood as indicating or implying the relative importance. "Perpendicular" is not strictly perpendicular, but within the allowable range of errors. "Parallel" is not strictly parallel, but within the allowable range of errors. Orientation words appearing in the following description are all directions shown in the drawings, and do not limit the specific structure of the present application.

In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

Reference herein to "an embodiment" means that a particular feature, structure, or characteristic described in conjunction with the embodiment may be comprised in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

An existing battery cell generally comprises a case and an electrode assembly accommodated in the case, and the case is filled with electrolyte. The electrode assembly is mainly formed by stacking or winding a first electrode plate and a second electrode plate having a polarity opposite to that of the first electrode plate. Furthermore, an insulating member, for example, a membrane, is generally arranged between the first electrode plate and the second electrode plate. Portions of both the first electrode plate and the second electrode plate that are coated with active materials constitute a main body part of the electrode assembly, and portions of both the first electrode plate and the second electrode plate that are not coated with active materials respectively constitute a first tab and a second tab. In a battery cell, the first electrode plate may be a positive electrode plate, comprising a positive electrode current collection member and positive electrode active material layers arranged on two sides of the positive electrode current collection member. The positive electrode current collector may use a metal foil or a composite current collector. For example, as the metal foil, silver surface-treated aluminum or stainless steel, stainless steel, copper, aluminum, nickel, baked carbon, carbon, nickel, titanium, or the like may be used. The composite current collector may comprise a high molecular material substrate layer and a metal layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene). Each positive electrode active material layer may comprise at least one of the following materials: a lithium-containing phosphate, a lithium transition metal oxide, and their respective modified compounds. However, the present application is not limited to these materials, or other conventional materials that can be used as positive electrode active materials of batteries may be used. These positive electrode active materials may be used alone or two or more of these positive electrode active materials may be combined for use. Each second electrode plate may be a negative electrode plate, comprising a negative current collection member and negative active material layers arranged on two sides of the negative current collection member. The negative current collector may use a metal foil or a composite current collector. For example, as the metal foil, silver surface-treated aluminum or stainless steel, stainless steel, copper, aluminum, nickel, baked carbon, carbon, nickel, titanium, or the like may be used. The composite current collector may comprise a high molecular material substrate layer and a metal layer. The composite current collector may be formed by forming a metal material (such as copper, copper alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene). The negative active material layers may use a negative active material that are commonly known in this field and are applied to batteries. As an example, the negative active material may comprise at least one of the following materials: artificial graphite, natural graphite, soft carbon, hard carbon, a silicon-based material, a tin-based material, lithium titanate, and the like. Optionally, the first electrode plate may also be a negative electrode plate, and correspondingly, each second electrode plate may be a positive electrode plate. The first tab and the second tab may be located at one end of the main body part jointly or at two ends of the main body part separately. In charging and discharging processes of the battery cell, the positive electrode active material and the negative electrode active material react with the electrolyte, and the tabs are connected to electrode terminals to form a current loop.

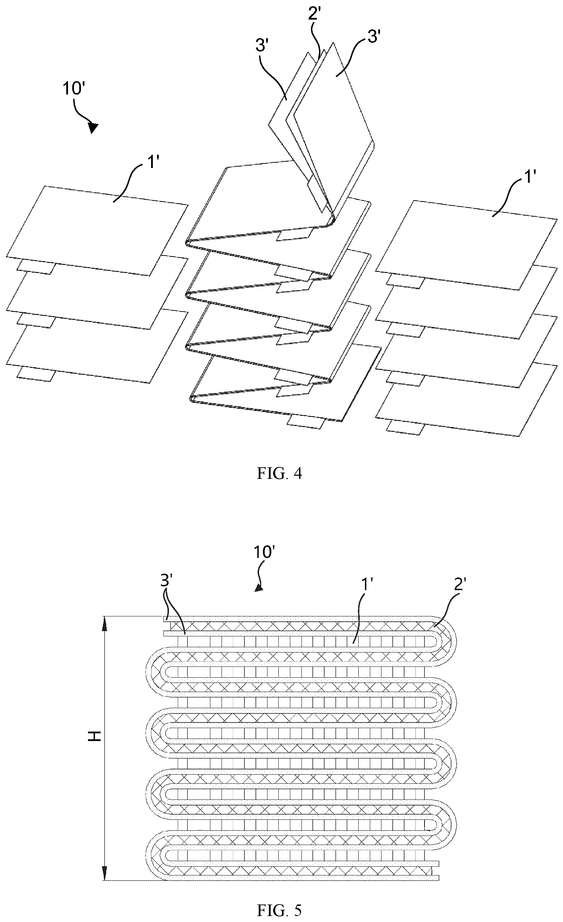

The application of the stacked type electrode assembly in the battery cell is gradually becoming widespread. The structure of the electrode assembly in the related art is as shown in FIG. 4 and FIG. 5. The electrode assembly 10' comprises multiple first electrode plates 1', a second electrode plate 2', and two spacers 3'. The second electrode plate 2' is sandwiched between the two spacers 3' and bent, and the first electrode plates 1' are alternately inserted on left and right sides in the bending and stacking process. The second electrode plate 2', which is compounded with the two layers of spacers 3', is alternately inserted with cut first electrode plates 1' left and right during stacking along Z, thus forming the electrode assembly 10' as shown in FIG. 5.

As found through research, during the bending process of the electrode assembly 10', only two electrode plates can be obtained in the stacking direction per folding, resulting in low stacking efficiency. Moreover, the electrode assembly 10' obtained after bending has many cut edges due to the numerous cut edges of the electrode plates, resulting in a higher risk of cutting burrs and powder falling.

Based on the problem, the present application provides an improved electrode assembly, which comprises a first electrode plate and at least two second electrode plates. The at least two second electrode plates are stacked and bent to form at least one bent portion. The bent portion comprises at least one bent section and at least two straight sections. Two adjacent straight sections are connected through the bent section. For each bent portion, the first electrode plate is provided between two adjacent straight sections, and the polarity of the first electrode plate is opposite to the polarity of the adjacent second electrode plate.

For the electrode assembly in the present application, by changing the forming structure, three or more electrode plates can be obtained at each time of folding. For electrode assemblies with the same thickness, the number of folding times can be reduced, thus improving the stacking efficiency and shortening the production cycle of the electrode assembly. In addition, since the number of the second electrode plates is increased, the number of the first electrode plates is reduced, thus reducing the number of cut edges in all electrode plates, and reducing the risk of cutting burrs and powder falling from the edges of the electrode plates. Moreover, the increase in the number of the second electrode plates increases the bending radius of the bent section, thus reducing the risk of fracture and powder falling when the second electrode plates are bent, and improving the performance of the electrode assembly.

The battery cell according to the embodiment of the present application is applicable to a battery and an electrical apparatus using the battery cell. The battery is also applicable to the electrical apparatus.

The battery according to the embodiments of the present application is also applied to an electrical apparatus. The electrical apparatus may be a storage battery car, an electric vehicle, a ship, a spacecraft, or the like. For example, the spacecraft comprises an airplane, a rocket, a space shuttle, a spaceship, and the like.

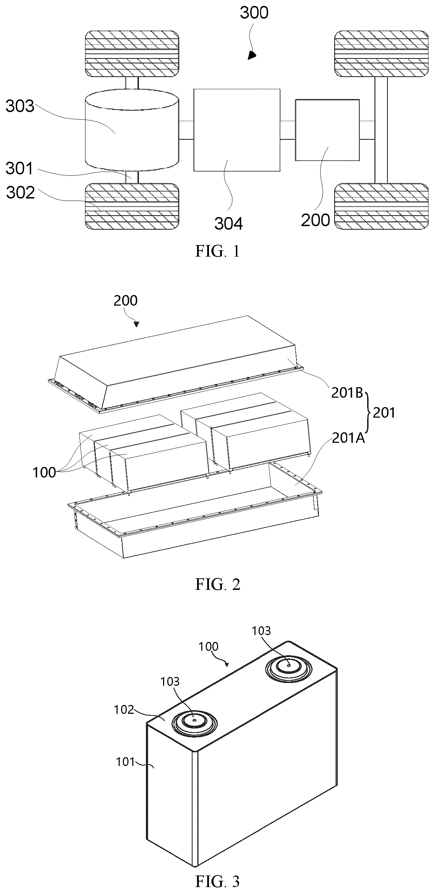

As shown in FIG. 1, the electrical apparatus may be a vehicle 300, which may be, for example, a new-energy vehicle. The new-energy vehicle may be an all-electric vehicle, a hybrid electric vehicle, an extended range electric vehicle, and the like, or the electrical apparatus may be an unmanned aerial vehicle, a ship, or the like. Specifically, the vehicle 300 may comprise an axle 301, wheels 302 connected to the axle 301, a motor 303, a controller 304, and a battery 200. The motor 303 is configured to drive the axle 301 to rotate, and the controller 304 is configured to control the motor 303 to work. The battery 200 may be arranged at a bottom, head, or tail of the vehicle 300 to provide electrical energy for the operation of the motor 303 and other components in the vehicle.

As shown in FIG. 2, the battery 200 comprises a box body assembly 201 and a battery cell 100. The battery 200 may comprise one or more battery cells 100. If there are multiple battery cells 100, the multiple battery cells 100 may be connected in series or in parallel or may be in parallel-series connection. The parallel-series connection means that the multiple battery cells 100 are connected in series and in parallel. It may be that multiple battery cells 100 are connected in series or in parallel or are in parallel-series connection first to form multiple battery modules, and the multiple battery modules are connected in series or in parallel or are in parallel-series connection to form an entirety which is accommodated in the box body assembly 201. Or, all the battery cells 100 may be directly connected in series or in parallel or may be in parallel-series connection, and then an entirety composed of all the battery cells 100 is accommodated in the box body assembly 201.

The box body assembly 201 may be a portion of a battery pack. The box body assembly 201 may be detachably mounted on the electrical apparatus; or the box body assembly 201 may be a space that is formed by a structural member in the electrical apparatus and is configured to accommodate the battery cells 100. For example, when the battery cells 100 are applied to the vehicle 300, the box body assembly 201 is a space that is formed by a frame and is configured to accommodate the battery cells 100.

The box body assembly 201 is internally hollow, which is configured to accommodate one or more battery cells 100. The box body assembly 201 can also have different shapes and sizes according to a shape, quantity, combination manner and other requirements of the battery cells 100 accommodated. For example, the box body assembly 201 may comprise: a box body 201A and a cover body 201B. The box body 201A has an opening, and the cover body 201B is configured to close an opening of the box body 201A. In FIG. 2, according to an arrangement manner of the multiple battery cells 100, the box body 201A is a rectangular tubular structure.

FIG. 3 is an outline drawing of a battery cell 100 according to some embodiments. The battery cell may be a secondary battery. The secondary battery refers to a battery cell that can be used continually by activating an active material in a charging manner after the battery cell 100 is discharged.

The battery cell may be a lithium-ion battery, a sodium-ion battery, a sodium/lithium-ion battery, a lithium metal battery, a sodium metal battery, a lithium-sulfur battery, a magnesium-ion battery, a nickel hydrogen battery, a nickel cadmium battery, a lead storage battery, and the like. The embodiments of the present application are not limited to this.

In some embodiments, the battery cell may comprise a shell and an electrode assembly. The shell is configured to encapsulate components, such as the electrode assembly and electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell comprises a square-shell battery cell, a blade-shaped battery cell, and a multi-prism battery. For example, the multi-prism battery may be a hexagonal prism battery. The present application has no special limitation.

In some embodiments, the shell comprises an end cover 102 and a case 101. The case 101 is provided with an opening, and the end cover 102 closes the opening to form a closed space for accommodating substances such as the electrode assembly and the electrolyte. The case 101 may be provided with one or more openings. One or more end covers 102 may also be provided.

In some embodiments, the shell is provided with at least one electrode terminal 103, and the electrode terminal 103 is electrically connected to a tab of the electrode assembly. The electrode terminal 103 may be directly connected to the tab, or may be indirectly connected to the tab through an adapter component. The electrode terminal 103 may be arranged on the end cover 102, or may be arranged on the case 101.

The structure of the electrode assembly 10 in the battery cell 100 in the present application will be described below.

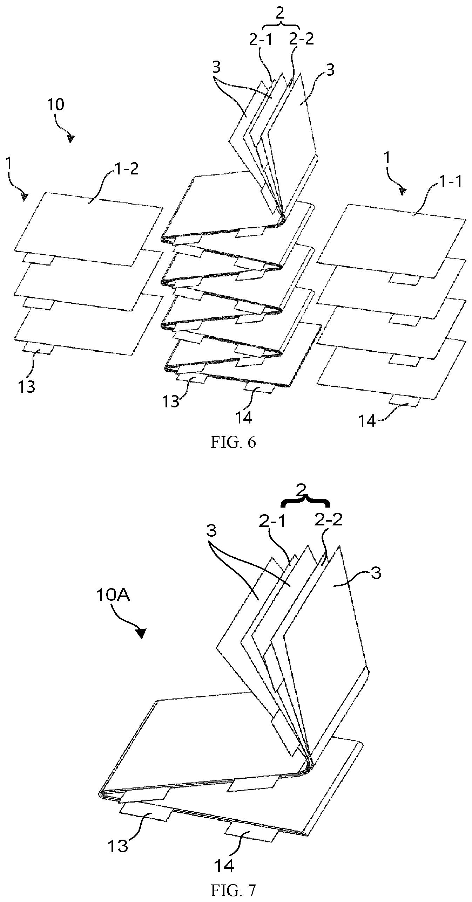

In some embodiments, as shown in FIG. 6, the present application provides an electrode assembly 10, which comprises a first electrode plate 1 and at least two second electrode plates 2. The at least two second electrode plates 2 are stacked and bent to form at least one bent portion S. The bent portion S comprises at least one bent section S2 and at least two straight sections S1. Two adjacent straight sections S1 are connected through the bent section S2. For each bent portion S, the first electrode plate 1 is provided between two adjacent straight sections S1, and the polarity of the first electrode plate 1 is opposite to the polarity of the adjacent second electrode plate 2.

The electrode assembly 10 adopts a stacked type structure. At least one first electrode plate 1 is provided. The first electrode plate 1 is a discrete cut electrode plate, may be a rectangular structure with length and width close to each other, and is a flat plate structure in the electrode assembly 10 product. Each first electrode plate 1 forms a layer in the stacking direction.

The number of the at least two second electrode plates 2 may be two, three, four, or more. The at least two second electrode plates 2 being stacked refers to that all second electrode plates 2 are stacked along the thickness direction. Here, one second electrode plate 2 is located on the same layer in a case that the second electrode plate 2 is in an unfolded state; one second electrode plate 2 may be a continuous elongated electrode plate, or it may comprise multiple cut electrode plates spaced apart along the extension direction of the second electrode plate 2, as long as the at least two second electrode plates 2 can be compounded to form a continuous and bendable first composite electrode plate 10A, as shown in FIG. 7.

The first composite electrode plate formed by the at least two second electrode plates 2 is bent to form at least one bent portion S. When at least two bent portions S are formed, the at least two bent portions S are sequentially connected to form a continuous bent structure. For one bent portion S, the at least two straight sections S1 are stacked in the stacking direction Z, two adjacent straight sections S1 are connected through the bent section S2, and the bent section S2 may be in an arc-shaped structure, such as a circular arc-shaped structure. For adjacent bent portions S, two straight sections S1 that are close to each other in the adjacent bent portions S are also connected through the bent portions S. Therefore, the entire first composite electrode plate formed after bending comprises the at least two straight sections S1 arranged in the stacking direction Z. All straight sections S1 are sequentially connected through the bent sections S2. One first electrode plate 1 may be arranged between every two adjacent straight sections S1.

The bent portion S may be V-shaped, Z-shaped, W-shaped, or the like. For example, when the bent portion S is V-shaped, it comprises two straight sections S1 and one bent section S2; when the bent portion S is Z-shaped, the bent portion S comprises three straight sections S1 and two bent sections S2, and the orientations of the two bent sections S2 are opposite; and when the bent portion S is W-shaped, the bent portion S comprises four straight sections S1 and three bent sections S2.

For each bent portion S, the first electrode plate 1 is arranged between two adjacent straight sections S1. For adjacent bent portions S, the first electrode plate 1 may also be arranged between two straight sections S1 that are close to each other, that is, the first electrode plate 1 is arranged between every two adjacent straight sections S1 in the electrode assembly 10, and the polarity of the first electrode plate 1 is opposite to the polarity of the adjacent second electrode plate 2. The at least two second electrode plates 2 may comprise a positive electrode plate and a negative electrode plate, and the polarity of the first electrode plate 1 may be set according to the second electrode plate 2.

For the electrode assembly 10 in the present application, by changing the forming structure, three or more electrode plates can be obtained at each time of folding. For electrode assemblies 10 with the same thickness, the number of folding times can be reduced, thus improving the stacking efficiency and shortening the production cycle of the electrode assembly 10. In addition, since the number of the second electrode plates 2 is increased, the number of the first electrode plates 1 is reduced, thus reducing the number of cut edges in all electrode plates, and reducing the risk of cutting burrs and powder falling from the edges of the electrode plates. Moreover, the increase in the number of the second electrode plates 2 increases the bending radius of the bent section S2, thus reducing the risk of fracture and powder falling when the second electrode plates 2 are bent, and improving the performance of the electrode assembly 10.

In some embodiments, as shown in FIG. 7, the electrode assembly 10 further comprises at least three spacers 3 stacked and bent together with the at least two second electrode plates 2 to form the at least one bent portion S.

The spacers 3 may be separators. There is no particular limitation on the type of the separators in the present application. Any commonly known porous separator with good chemical stability and mechanical stability can be used.

As an example, the main material of the separator may be selected from at least one of glass fiber, non-woven fabric, polyethylene, polypropylene, polyvinylidene fluoride, and ceramic. The separator may be a single-layer film, or may be a multi-layer composite film, which is not particularly limited. When the separator is a multi-layer composite film, the material in each layer may be same or different, which is not particularly limited. The spacer may be a separate component located between a positive electrode and a negative electrode, or may be attached to surfaces of the positive electrode and the negative electrode.

The spacer 3 may be solid electrolyte. The solid electrolyte simultaneously plays the role of transporting ions and separating the positive electrode from the negative electrode.

The spacer 3 may comprise a membrane base layer and a functional layer. The membrane base layer may be at least one of polypropylene, polyethylene, an ethylene-propylene copolymer, polybutylene terephthalate, and the like, and the functional layer may be a mixture layer of ceramic oxide and a binder. After each bent portion S is unfolded flat, the spacer 3 may be elongated. Alternatively, in a case that the second electrode plate 2 is a continuous elongated structure, the spacers 3 may also be arranged discontinuously along the extension direction of the second electrode plates 2.

The width of each spacer 3 may be greater than the thickness of each second electrode plate 2 to better separate the positive electrode plate from the negative electrode plate.

Before the electrode assembly 10 is formed, at least two second electrode plates 2 and at least three spacers 3 are stacked together to form a continuous and bendable first composite electrode plate 10A after compounding. The second electrode plates 2 and the spacers 3 are alternately arranged. Every two adjacent second electrode plates 2 may be separated through the spacers 3 to achieve an insulating effect.

For the electrode assembly 10' in the related art shown in FIG. 4 and FIG. 5, only two layers of spacers 3' are provided. The adhesive force of the spacers 3' to the second electrode plates 2' is relatively small, and it is easy to cause relative displacement during the bending process, making it difficult to maintain the shape of the electrode assembly 10 '. Moreover, it is difficult to compact and shape the electrode assembly 10' after folding, and the required time is long.

In this embodiment of the present application, by increasing the number of layers of the spacers 3, the adhesive force of the spacers 3 to the second electrode plates 2 increases, so that relative displacement between the spacers 3 and the second electrode plates 2 is less likely to occur in the bending process of the first composite electrode 10A, the shape of the electrode assembly 10 can be maintained in the stacking process, and it is easier to compact and shape the electrode assembly 10 through hot or cold pressing after folding, thus shortening the time for shaping the electrode assembly 10, and improving the shaping efficiency of the electrode assembly 10.

In some embodiments, at least one of the second electrode plates 2 and the spacers 3 is continuous.

Optionally, the second electrode plates 2 are continuous, and the spacers 3 are discontinuously arranged along the extension direction of the second electrode plates 2; alternatively, the spacers 3 may be continuous, and the second electrode plates 2 may be discontinuously arranged along its extension direction; alternatively, both the second electrode plates 2 and the spacers 3 are continuous.

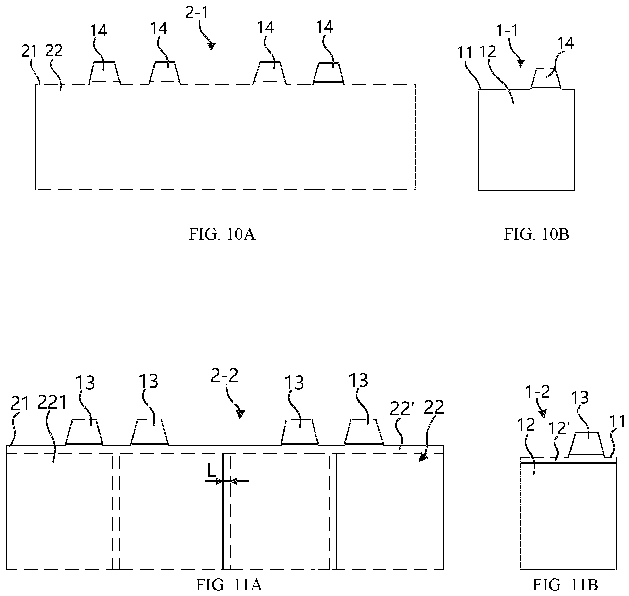

Referring to FIG. 10A and FIG. 11A, each second electrode plate 2 comprises a second current collector 21 and a second active material layer 22. The second electrode plate 2 being continuous comprises the following two situations: for the second electrode plate 2-1 shown in FIG. 10A, the second current collector 21 is a continuous elongated structure, and the second active material layer 22 is continuously coated on the second current collector 21 along the entire length direction; for the second electrode plate 2-2 shown in FIG. 11A, the second current collector 21 is a continuous elongated structure, the second active material layer 22 is discontinuously coated on the second current collector 21 along the entire length direction to form multiple active material regions 221, and a gap L is set between every two adjacent active material regions 221. For example, the gap L may expose the second current collector 21, and be coated with an adhesive or an insulating layer such as AT9/AT11.

In this embodiment, a continuous first composite electrode plate 10A can be formed, so that the first composite electrode plate 10A can be conveniently bent, thus facilitating the formation of the stacked type electrode assembly 10, and improving the forming efficiency of the electrode assembly 10.

In some embodiments, the second electrode plates 2 and the spacers 3 are both continuous.

Referring to FIG. 7, all second electrode plates 2 and all spacers 3 are continuous.

The second electrode plates 2 are continuous as long as they are not completely disconnected along the extension direction, that is, the second electrode plates 2 being disconnected on part of the width falls within the scope of protection of the present application.

Optionally, only a part of the second electrode plates 2 is continuous, and/or only a part of the spacers 3 is continuous. Specifically, in a case of at least two second electrode plates 2, a part of the second electrode plates 2 is continuous, while the other part of the second electrode plates 2 may be discontinuously arranged along the extension direction; in case of at least three spacers 3, a part of the spacers 3 is continuous, while other part of the spacers 3 may be discontinuously arranged along the extension direction, as long as all second electrode plates 2 and all spacers 3 are compounded to form a continuous and bendable first composite electrode plate 10A.

In this embodiment, the second electrode plates 2 and the spacers 3 are both provided as continuous structures, thus improving the efficiency of forming the first composite electrode plate 10A by compounding, making it easier to align the spacers 3 with the second electrode plates 2 during stacking, and improving the production efficiency and performance of the electrode assembly 10.

In some embodiments, the second electrode plate 2 is provided between every two adjacent spacers 3.

One second electrode plate 2 may be arranged between every two adjacent spacers 3, that is, at least two second electrode plates 2 and at least three spacers 3 are alternately arranged, and the number of the spacers 3 is one more than the number of the second electrode plates 2; alternatively, more than two second electrode plates 2 with the same polarity may be arranged.

This embodiment can maximize the number of second electrode plates 2 in a case that the number of spacers 3 is fixed, thus reducing the number of folding times and improving the stacking efficiency. In addition, since the number of the second electrode plates 2 increases, the number of the first electrode plates 1 is reduced, thus reducing the number of cut edges in all electrode plates, and reducing the risk of cutting burrs and powder falling from the edges of the electrode plates. Moreover, the bending radius of the bent section S2 is increased, thus reducing the risk of fracture and powder falling when the second electrode plates 2 are bent, and improving the performance of the electrode assembly 10.

In some embodiments, each spacer 3 is provided with a bonding layer, and the first electrode plate 1 is attached to the spacer 3 located on an outer side of the at least three spacers 3 through the bonding layer; and/or the second electrode plate 2 is attached to the spacer 3 through the bonding layer.

Bonding layers may be respectively provided on two sides of the spacer 3. For example, the bonding layers are polyvinylidene fluoride (PVDF) coated separator (PCS) layers. When the at least two second electrode plates 2 are compounded with the at least three spacers 3, compounding by heating may be adopted. In the process of applying pressure to the second electrode plates 2 and the spacers 3, many particles distributed in dots in the PCS layers are flattened to generate adhesive force on the second electrode plates 2, thus attaching the second electrode plates 2 to the spacers 3 through the bonding layers to form the first composite electrode plate 10A.

In one process, multiple first electrode plates 1 are provided, the multiple first electrode plates 1 are alternately placed on the two spacers 3 on the outer sides, pressure is applied through a roller to attach the first electrode plates 1 to the spacers 3 on the outer sides through the PCS layers to form a second composite electrode plate, and then the second composite electrode plate is folded.

In another process, multiple first electrode plates 1 are provided, the first composite electrode plate 10A is folded, the multiple first electrode plates 1 are sequentially inserted from two sides in the folding process to form the electrode assembly 10, pressure is applied to the electrode assembly 10 along the stacking direction Z to attach the multiple first electrode plates 1 to the spacers 3 on the outer sides through the PCS layers.

In addition, compounding may also be achieved through cold pressing, electrophoresis, or bonding.

In this embodiment, the compounding with the first electrode plate 1 and/or second electrode plate 2 can be achieved through the bonding layer on the side surface of the spacer 3, thus conveniently forming the composite electrode plate for folding, maintaining the position between adjacent electrode plates, preventing displacement between adjacent electrode plates, and improving the performance of the electrode assembly 10.

In some embodiments, the polarities of every two adjacent second electrode plates 2 are opposite.

Every two adjacent second electrode plates 2 with opposite polarities may be insulated through the spacers 3.

For example, the second electrode plate 2 located on the outermost side in the stacking direction Z after folding may be a negative electrode plate. Generally, the positive electrode active material in the positive electrode plate is a ternary material, lithium manganate, or lithium iron phosphate, while the negative electrode active material in the negative electrode plate is generally graphite or silicon. since the positive electrode active material is more expensive than the negative electrode active material, making the outermost layer of the electrode assembly 10 be the negative electrode plate can reduce the number of layers of the positive electrode plates after folding and fully utilize the positive electrode active material in the positive electrode plate, thus not only improving the energy utilization efficiency of the electrode assembly 10, but also reducing the cost of the electrode assembly 10.

In this embodiment, by making the polarities of every two adjacent second electrode plates 2 opposite, lithium ions can be deintercalated from the second electrode plate 2 with one polarity and be directly intercalated into the adjacent second electrode plate 2 with the other polarity after passing through the electrolyte, thus optimizing the charging and discharging performance of the electrode assembly 10.

In some embodiments, referring to FIG. 6 to FIG. 9, the number of the second electrode plates 2 is even, the number of the second electrode plates 2 with a first polarity is equal to the number of the second electrode plates 2 with a second polarity, and the first polarity is opposite to the second polarity.

The number of the second electrode plates 2 may be two, four, or six. For example, in FIG. 6, two second electrode plates 2 are provided, the number of the second electrode plates 2 with the first polarity and second polarities is equal, the second electrode plates 2 with the first polarity and the second polarity are alternately arranged, and the spacers 3 are provided between every two adjacent second electrode plates 2 with different polarities. The first polarity may be positive polarity, and correspondingly the second polarity is negative polarity; or the first polarity may be negative polarity, and correspondingly the second polarity is positive polarity.

For example, the second electrode plate 2-1 is a positive electrode plate, the second electrode plate 2-2 is a negative electrode plate, and the spacer 3, the second electrode plate 2-1, the spacer 3, the second electrode plate 2-2, and the spacer 3 are sequentially stacked. Alternatively, the second electrode plate 2-1 may be a negative electrode plate, and the second electrode plate 2-2 may be a positive electrode plate.

In this embodiment, the number of the second electrode plates 2 with opposite polarities are enabled to be equal, thus making the positive and negative electrode plates evenly distributed along the stacking direction after at least two second electrode plates 2 are bent. Moreover, the number of first tabs 13 and second tabs 14 with opposite polarities led out from the at least two second electrode plates 2 is close to each other, making it easy to ensure the alignment of tabs with the same polarity.

Based on the previous embodiment, multiple first electrode plates 1 are provided, the multiple first electrode plates 1 have a first polarity and a second polarity, and the multiple first electrode plates 1 with the first polarity and the second polarity are alternately arranged along a stacking direction Z of at least two straight sections S1.

For example, the second electrode plate 2-1 is a positive electrode plate, the second electrode plate 2-2 is a negative electrode plate, the first electrode plate 1-1 is adjacent to the second electrode plate 2-2 and is a positive electrode plate, and the first electrode plate 1-2 is adjacent to the first electrode plate 2-1 and is a negative electrode plate. Alternatively, the polarity of each electrode plate described above may be reversed.

FIG. 10A is an unfolded diagram of the second electrode plate 2-1. The second electrode plate 2-1 comprises a second current collector 21 and a second active material layer 22. The second active material layer 22 is provided on a side surface of a second main body part of the second current collector 21. The second main body part is an elongated ribbon structure. A second tab 14 is formed on an uncoated portion of the second current collector 21 outside the second main body part. Multiple second tabs 14 are spaced apart along the length direction on one side of the width direction Y of the second electrode plate 2-1. Every two second tabs 14 form a group. The distance between the two second tabs 14 in each group is smaller than the distance between the two second tabs 14 that are close to each other of two adjacent groups. After the second electrode plate 2-1 and the second electrode plate 2-2 are bent, all second tabs 14 in the second electrode plate 2-1 are overlapped.

FIG. 10B is a schematic structural diagram of the first electrode plate 1-1. The polarity of the first electrode plate 1-1 is the same as the polarity of the second electrode plate 2-1. The first electrode plate 1-1 comprises a first current collector 11 and a first active material layer 12. The first active material layer 12 is provided on a side surface of a first main body part of the first current collector 11. The first main body part is a rectangular structure. A second tab 14 is formed on an uncoated portion of the first current collector 11 outside the first main body part. One second tab 14 is arranged on one side of the first electrode plate 1-1 along the width direction Y. In the electrode assembly 10, the first electrode plate 1-1 is overlapped with the second tab 14 of the second electrode plate 2-1. One side of each first electrode plate 1-1 is provided with a second tab 14 along the width direction Y. In the electrode assembly 10, the second tab 14 is located in a region of the first electrode plate 1-1 close to the outer side along the opening direction X of the bent section S2.

FIG. 11A is an unfolded diagram of the second electrode plate 2-2. The second electrode plate 2-2 comprises a second current collector 21 and a second active material layer 22. The second active material layer 22 is provided on a side surface of a second main body part of the second current collector 21. The second main body part is an elongated ribbon structure. The second active material layer 22 may comprise multiple active material regions 221 spaced apart along the length direction of the second electrode plate 2-2. A gap L is set between every two adjacent active material regions 221.

A first tab 13 is formed on an uncoated portion of the second current collector 21 outside the second main body part. Multiple first tabs 13 are spaced apart along the length direction on one side of the width direction Y of the second electrode plate 2-2. Every two first tabs 13 form a group. The distance between the two first tabs 13 in each group is smaller than the distance between the two first tabs 13 that are close to each other of two adjacent groups. The two first tabs 13 in each group respectively correspond to the two adjacent active material regions 221. Each active material region 221 is correspondingly provided with one first tab 13. After the second electrode plate 2-1 and the second electrode plate 2-2 are bent, all first tabs 13 of the second electrode plate 2-2 are overlapped, and the first tabs 13 and the second tabs 14 are spaced apart along the opening direction X of the bent section S2.

Optionally, the second electrode plate 2-2 further comprises a second insulating layer 22'. The second insulating layer 22' is located at the edge of the second main body part along the width direction Y and is located between the first tab 13 and the second active material layer 22.

FIG. 11B is a schematic structural diagram of the first electrode plate 1-2. The polarity of the first electrode plate 1-2 is the same as the polarity of the second electrode plate 2-2. The first electrode plate 1-2 comprises a first current collector 11 and a first active material layer 12. The first active material layer 12 is provided on a side surface of a first main body part of the first current collector 11. The first main body part is a rectangular structure. A first tab 13 is formed on an uncoated portion of the first current collector 11 outside the first main body part. One first tab 13 is arranged on one side of the first electrode plate 1-12 along the width direction Y. In the electrode assembly 10, the first electrode plate 1-2 is overlapped with the first tab 13 of the second electrode plate 2-2.

Optionally, the first electrode plate 1-2 further comprises a first insulating layer 12'. The first insulating layer 12' is located at the edge of the first main body part along the width direction Y and is located between the first tab 13 and the first active material layer 12.

One side of each first electrode plate 1-2 is provided with a first tab 13 along the width direction Y. The first tab 13 is located in a region of the first electrode plate 1-2 close to the outer side along the opening direction X of the bent section S2.

In this embodiment, since the number of layers of electrode plates with two polarities formed by bending at least two second electrode plates 2 is equal, multiple first electrode plates 1 have two polarities, and the multiple first electrode plates 1 with the two polarities are alternately arranged along the stacking direction Z, all electrode plates with the first polarity and the second polarity in the electrode assembly 10 can be alternately arranged along the stacking direction Z, thus optimizing the charging and discharging performance of the electrode assembly 10.

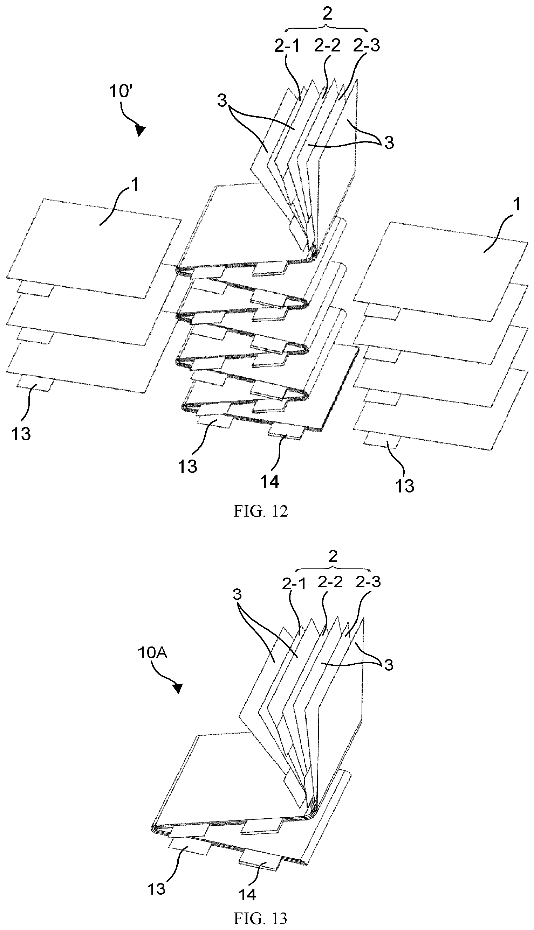

In some embodiments, referring to FIG. 12, the number of the second electrode plates 2 is odd, the number of the second electrode plates 2 with a first polarity is greater than the number of the second electrode plates 2 with a second polarity, multiple first electrode plates 1 are provided, and all of the multiple first electrode plates 1 have the second polarity.

The number of the second electrode plates 2 may be three, five, or seven. For example, in FIG. 12, three second electrode plates 2 are provided, comprising a second electrode plate 2-1, a second electrode plate 2-2, and a second electrode plate 2-3. The number of the second electrode plates 2 with a first polarity may be one more than the number of the second electrode plates 2 with a second polarity. The second electrode plates 2 with the first polarity and the second polarity are alternately arranged, and the spacers 3 are provided between every two adjacent second electrode plates 2 with different polarities. The first polarity may be positive polarity, and correspondingly the second polarity is negative polarity; or the first polarity may be negative polarity, and correspondingly the second polarity is positive polarity.

For example, the second electrode plate 2-2 is a positive electrode plate, and the second electrode plate 2-1 and the second electrode plate 2-3 are negative electrode plates. Correspondingly, all first electrode plates 1 are positive electrode plates. Referring to FIG. 13, the spacer 3, the second electrode plate 2-1, the spacer 3, the second electrode plate 2-2, the spacer 3, the second electrode plate 2-3, and the spacer 3 are sequentially stacked and compounded to form a first composite electrode plate 10A, and then the first composite electrode plate 10A is bent. Alternatively, the second electrode plate 2-2 is a negative electrode plate, and the second electrode plate 2-1 and the second electrode plate 2-3 are positive electrode plates. Correspondingly, all first electrode plates 1 are negative electrode plates.

For the specific structures of the first electrode plates 1, the second electrode plate 2-1, the second electrode plate 2-2, and the second electrode plate 2-3, a reference may be made to FIG. 10A, FIG. 10B, FIG. 11A, and FIG. 11B in the previous embodiment.

In this embodiment, by setting the number of the second electrode plates 2 to be odd, the total number of the second electrode plates 2 can be increased in a case that the number of the second electrode plates 2 which are fewer is fixed, the number of folding times can be further reduced when the total length of the electrode plates is fixed, thus improving the stacking efficiency, reducing the number of cut edges in all electrode plates, and reducing the risk of cutting burrs and powder falling from the edges of the electrode plates. Moreover, the bending radius of the bent section S2 is increased, thus reducing the risk of fracture and powder falling when the second electrode plates 2 are bent, and improving the performance of the electrode assembly 10. In addition, although the number of layers of electrode plates with two polarities formed by bending all second electrode plates 2 is different, by making all first electrode plates 1 have the same polarity as the second electrode plates 2 which are fewer, all electrode plates with the first polarity and the second polarity in the electrode assembly 10 can still be alternately arranged along the stacking direction Z, thus optimizing the charging and discharging performance of the electrode assembly 10.

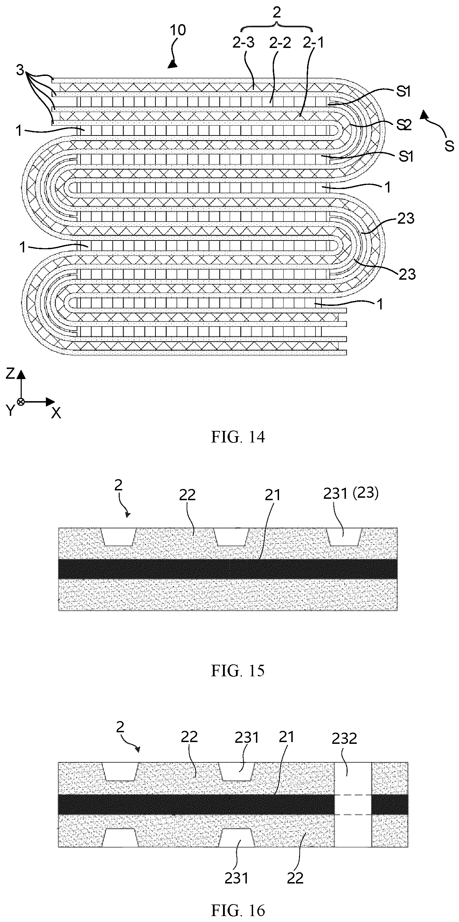

In some embodiments, referring to FIG. 14, an end portion of the first electrode plate 1 along an opening direction of the bent portion S2 does not exceed the straight sections S1.

A first end of the first electrode plate 1 is close to the bent portion S2, and the first end does not exceed a connection between the straight section S1 and an inner side surface of the bent section S2, thus preventing the first end of the first electrode plate 1 from being pressed against the bent portion S2, preventing the edge of the first electrode plate 1 from warping, and preventing the active material from falling from the inner side of the bent portion S2. A second end of the first electrode plate 1 is away from the bent section S2, and the second end does not exceed a connection between the straight section S1 and an outer side surface of the adjacent bent section S2, so that the straight section S1 can stably support the entire first electrode plate 1, thus preventing the edges of the first electrode plate 1 from exceeding the straight section S1, being overhung in the air and being deformed.

This embodiment can make the straight sections S1 stably support the first electrode plate 1, prevent the edges of the first electrode plate 1 from warping and deforming, make the electrode assembly 10 flatter after being compacted, and prevent the active material from falling when the first electrode plate 1 is pressed against the inner side surface of the bent portion S2, thus ensuring the performance of the electrode assembly 10.

In some embodiments, referring to FIG. 14, at least one of the second electrode plates 2 is provided with a material removal region 23 at the bent section S2, and the material removal region 23 extends along a width direction Y of the second electrode plate 2.

The material removal region 23 is used for weakening the strength at the bent portion S2 and forming a guide portion. During bending, the first composite electrode 10A can be guided to bend along the material removal region 23, thus achieving accurate bending at a predetermined position, reducing the displacement of two adjacent layers of electrode plates in the electrode assembly 10 after stacking, and enabling the battery to have good electrochemical performance.

The material removal region 23 may extend continuously along the width direction Y of the second electrode plate 2. For example, it may extend along part of the width of the second electrode plate 2 or along the entire width of the second electrode plate 2; alternatively, the material removal region 23 may also be discontinuously arranged along the width direction Y.

At the same bent section S2, the material removal region 23 may be arranged on some of the second electrode plates 2, thus ensuring the strength of the first composite electrode plate 10A on the premise of ensuring the accurate folding position of the first composite electrode plate 10A, and preventing fracture from occurring in the bending process. Optionally, the material removal region 23 may also be arranged on all second electrode plates 2 to reduce folding difficulty and improve the accuracy of the folding position of the first composite electrode plate 10A.

In this embodiment, since the second electrode plate 2 is provided with the material removal region 23 at the bent section S2, the second electrode plate 2 can be guided to bend accurately along the material removal region 23, thus reducing the difficulty in bending, reducing the displacement of two adjacent layers of electrode plates in the electrode assembly 10 after stacking, and enabling the battery to have good electrochemical performance.

In some embodiments, at least three second electrode plates 2 are provided, and the material removal region 23 is arranged on the second electrode plate 2 sandwiched between inner sides.

For example, three second electrode plates 2 are provided, the material removal region 23 is only provided on the second electrode plate 2 in the middle, and the second electrode plates 2 on the outer sides are not provided with the material removal region 23; alternatively, four second electrode plates 2 are provided, the material removal region 23 may be provided on at least one second electrode plate 2 on the inner side, and the two second electrode plates 2 on the outer sides are not provided with the material removal region 23.

In this embodiment, by arranging the material removal region 23 on the second electrode plate 2 sandwiched between the inner sides, when powder falling occurs at the position of the material removal region 23, the falling active material can be sandwiched in the middle and is not easily dropped outward, thus preventing a short circuit from occurring in the electrode assembly 10 during operation, and ensuring the electrochemical performance of the electrode assembly 10.

In some embodiments, referring to FIG. 15, the material removal region 23 comprises grooves 231, and the grooves 231 extend along the width direction Y.

Each second electrode plate 2 comprises a second current collector 21 and a second active material layer 22. The second active material layer 22 may be provided on one or two sides of the second current collector 21. The grooves 231 may be provided in the second active material layer 22. The depth of each groove 231 may be less than or equal to the thickness of the second active material layer 22. Such arrangement of the grooves 231 can maintain the integrity of the second current collector 21, thus ensuring the strength of the second electrode plate 2 and preventing it from being fractured during bending. Optionally, the depth of each groove 231 may be greater than the thickness of the second active material layer 22. Such arrangement of the grooves 231 can reduce the difficulty in bending the second electrode plate 2.

For example, the grooves 231 may be formed by means of a metal cutter, a laser cutter, or liquid etching. The cross section of each groove 231 may be rectangular, trapezoidal, triangular, or the like.

In this embodiment, the grooves 231 are provided as the material removal region 23, thus facilitating the manufacturing; the grooves 231 extend along the width direction Y, thus achieving a better effect of guiding the bending of the second electrode plates 2; moreover, the grooves 231 can achieve a smaller width during manufacturing, thus improving the accuracy of the bending position.

In some embodiments, referring to FIG. 16, two sides of the second electrode plate 2 are provided with the grooves 231 opposite to each other.

Two sides of the second current collector 21 are provided with second active material layers 22, and grooves 231 are respectively provided in the second active material layers 22 on the two sides. Optionally, the grooves 231 are provided only in the second active material layer 22 on one side.

In this embodiment, by providing the grooves 231 opposite to each other in two sides of the second electrode plate 2, the depth of the groove 231 on each side can be reduced in a case that the strength of the bent section S2 is fixed, so that the stress on the inner and outer sides of the second electrode plate 2 at the bent section S2 is more balanced, thus reducing the risk of fracture in the second electrode plate 2.

In some embodiments, the second electrode plate 2 comprises a second current collector 21 and a second active material layer 22, the second active material layer 22 is arranged on the second current collector 21, the second active material layer 22 comprises multiple active material regions 221 spaced apart, and the grooves 231 are formed between every two adjacent active material regions 221.

In this embodiment, the depth of each groove 231 is equal to the thickness of the second active material layer 22. When the grooves 231 are formed, the second current collector 21 is not influenced and the grooves 231 can be directly formed in the process of coating to form the second active material layer 22, thus eliminating the need for subsequent manufacturing to form the grooves 231, and improving the production efficiency of the second electrode plates 2.

In some embodiments, referring to FIG. 16, the material removal region 23 comprises multiple through holes 232, and the multiple through holes 232 are spaced apart along the width direction Y.

For example, the through holes 232 may be circular holes, rectangular holes, elliptical holes, or diamond holes.

In this embodiment, by providing the multiple through holes 232 to form the material removal region 23, since the thickness of the second electrode plates 2 is small, this structure does not require precise control of the depth of the grooves, thus reducing the requirement on the manufacturing accuracy; moreover, the through holes 232 can greatly weaken the strength of the second electrode plates 2, thus facilitating the bending.

In some embodiments, the second electrode plate 2 with the material removal region 23 is a positive electrode plate.

Correspondingly, the second electrode plate 2 without the material removal region 23 is a negative electrode plate. For example, three second electrode plates 2 are provided, the second electrode plate 2 in the middle is provided with the material removal region 23, and the second active material layers 22 of the two second electrode plates 2 on the outer sides are continuously coated. After the electrode assembly 10 is formed, it can be ensured that the edge of the active material layer of the negative electrode plate exceeds the edge of the active material layer of the positive electrode plate, thus meeting the requirement of overhang.

In this embodiment, after the electrode assembly 10 is formed, it can be ensured that the edge of the active material layer of the negative electrode plate exceeds the edge of the active material layer of the positive electrode plate, thus meeting the requirement of overhang, preventing lithium plating, and ensuring the performance of the electrode assembly 10.

In some specific embodiments, referring to FIG. 6 to FIG. 9, the electrode assembly 10 comprises two second electrode plates 2, three spacers 3, and multiple first electrode plates 1. The two second electrode plates 2 are respectively a second electrode plate 2-1 and a second electrode plate 2-2. The second electrode plate 2-1 has a first polarity, and the second electrode plate 2-2 has a second polarity. One first electrode plate 1 is provided between every two adjacent straight sections S1. The first electrode plate 1-2 adjacent to the second electrode plate 2-1 has the second polarity, and the first electrode plate 1-1 adjacent to the second electrode plate 2-2 has the first polarity. The multiple first electrode plates 1 with the first polarity and the second polarity are alternately arranged along the stacking direction Z.

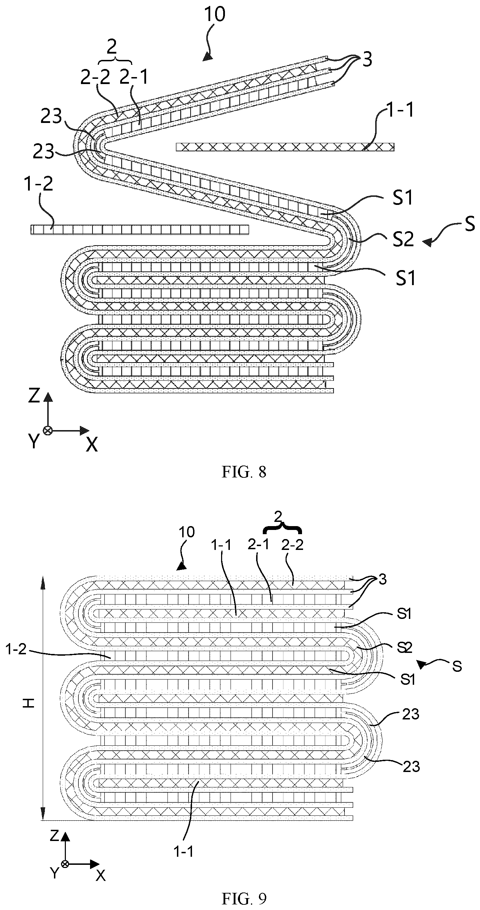

Referring to FIG. 7, by using an unwinding mechanism, a compounding mechanism and the like, the two second electrode plates 2 and the three spacers 3 are firstly compounded to form a first composite electrode plate 10A. One second electrode plate 2 is arranged between every two adjacent spacers 3. Referring to FIG. 8, the first composite electrode plate 10A is bent, and the first electrode plate 1-1 and the first electrode plate 1-2 may be alternately inserted left and right in the bending process, or the first electrode plate 1-1 and the first electrode plate 1-2 may be compounded with the first composite electrode plate 10A before bending. FIG. 9 shows the electrode assembly 10 formed after bending. Every two adjacent straight sections S1 are connected through the bent section S2. The straight sections S1 and the bent section S2 may be tangent at the connection. One first electrode plate 1 may be arranged between every two adjacent straight sections S1.

The electrode assembly 10 in the present application has the following effects:
(1) By adopting such electrode assembly 10, three electrode plates can be obtained at each time of folding. For electrode assemblies 10 with the same thickness, the number of folding times can be reduced, thus improving the stacking efficiency and shortening the production cycle of the electrode assembly 10. When the height H of the electrode assemblies 10 is the same, the number of layers of the folded second electrode plates 2' in the related art shown in FIG. 5 is N, the number of layers of the folded second electrode plates 2 in the present application shown in FIG. 9 is M, and it can be concluded that M≈2N/3.
(2) Since the number of the second electrode plates 2 increases, the number of the first electrode plates 1 is reduced, thus reducing the number of cut edges in all electrode plates, and reducing the risk of cutting burrs and powder falling from the edges of the electrode plates. Moreover, increasing the number of the second electrode plates 2 increases the bending radius of the bent section S2, thus reducing the risk of fracture and powder falling when the second electrode plates 2 are bent, and improving the performance of the electrode assembly 10. The cut edges mainly comprise the edges of the first electrode plate 1 located on two sides of the opening direction X of the bent section S2, and the edges of the second electrode plate 2 along the extension direction.
   Specifically, in the related art shown in FIG. 5, if the number of layers of the first electrode plates 1 is N-1, the total number of the cut edges is 2+2(N-1)=2N. Referring to FIG. 9, in the present application, the number of layers of the folded second electrode plates 2 is M, the number of layers of the first electrode plate 1-2 is M/2-1, and the number of layers of the first electrode plate 1-1 is M/2. Therefore, the total number of the cut edges of the first electrode plates 1 and the second electrode plates 2 is 4+2(M/2-1)+2*M/2=2M+2. Since M≈2N/3, the total number of the cut edges is 4N/3+2. By comparison, 4N/3+2<2N (N>3). Therefore, the electrode assembly 10 in the present application reduces the number of the cut edges.
(3) Such electrode assembly 10 is provided with one more layer of spacer 3, and the particles in the PCS layer on the spacer 3 can effectively stick the electrode plates. As the number of the second electrode plates 2 increases, the number of the spacers 3 also increases synchronously. When the material strip is rolled and compounded, the electrode plates are stuck through the multiple layers of spacers 3, and the bonding force of the composite material strip will be increased by more than four times compared to the related art. After the electrode assembly 10 shown in FIG. 9 is formed, the shaping time of the electrode assembly 10 during hot pressing or cold pressing will be greatly shortened.

In some other specific embodiments, referring to FIG. 12 to FIG. 14, the electrode assembly 10 comprises three second electrode plates 2, four spacers 3, and multiple first electrode plates 1. The three second electrode plates 2 are respectively a second electrode plate 2-1, a second electrode plate 2-2, and a second electrode plate 2-3. The second electrode plate 2-1 and the second electrode plate 2-3 have a first polarity, and the second electrode plate 2-2 has a second polarity. One first electrode plate 1 is provided between every two adjacent straight sections S1. All first electrode plates 1 have the second polarity.

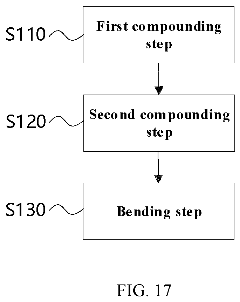

Secondly, the present application provides a manufacturing method of an electrode assembly 10. In some embodiments, referring to FIG. 17, the manufacturing method comprises:
S110, a first compounding step: compounding at least two second electrode plates 2 with at least three spacers 3 to form a first composite electrode plate 10A;
S120, a second compounding step: respectively compounding multiple first electrode plates 1 with the outermost two spacers 3 in the first composite electrode plate 10A, where the polarity of the first electrode plates 1 is opposite to the polarity of the adjacent second electrode plates 2; and
S130, a bending step: bending the first composite electrode plate 10A to form at least one bent portion S, where the bent portion S comprises at least one bent section S2 and at least two straight sections S1, two adjacent straight sections S1 are connected through the bent section S2, and the first electrode plate 1 is provided between the two adjacent straight sections S1.
S120 and S130 are both performed after S110, and the sequences of performing S120 and S130 may be interchangeable. In both the first compounding step and the second compounding step, the presence or absence of bonding between the electrode plates and the spacers 3 belongs to the scope of "compounding".

For example, in the first compounding step, the at least two second electrode plates 2 and at least three spacers 3 may be alternately arranged, and the polarities of two adjacent second electrode plates 2 are opposite. After stacking, all second electrode plates 2 and all spacers 3 may be compounded by bonding or applying pressure to form a first composite electrode plate 10A. In the second compounding step, the first electrode plates 1 may be alternately bonded to the outermost two spacers 3, or the first electrode plates 1 may be attached to the outermost two spacers 3 by applying pressure, or the first electrode plates 1 may be placed in a predetermined position to achieve compounding in the folding process of the first composite electrode plate 10A, all of which are within the scope of protection of the present application. In the bending step, the first composite electrode plate 10A is a continuous elongated ribbon structure that can be bent. Before bending the first composite electrode plate 10A, all first electrode plates 1 may be attached to the first composite electrode plate 10A, or the multiple first electrode plates 1 may be inserted one by one in the bending process of the first composite electrode plate 10A.

For the electrode assembly 10 in the present application, by changing the forming method and performing bending after compounding at least two second electrode plates 2, three or more electrode plates can be obtained at each time of folding. For electrode assemblies 10 with the same thickness, the number of folding times can be reduced, thus improving the stacking efficiency and shortening the production cycle of the electrode assembly 10. In addition, since the number of the second electrode plates 2 is increased, the number of the first electrode plates 1 is reduced, thus reducing the number of cut edges in all electrode plates, and reducing the risk of cutting burrs and powder falling from the edges of the electrode plates. Moreover, the increase in the number of the second electrode plates 2 increases the bending radius of the bent section S2, thus reducing the risk of fracture and powder falling when the second electrode plates 2 are bent, and improving the performance of the electrode assembly 10.

In some embodiments, the first compounding step and the second compounding step are both performed through heating.

Optionally, compounding may also be performed by means of cold pressing and bonding.

In this embodiment, by compounding through heating, the particles distributed in dots in the PCS layers on the two sides of the spacers 3 can be more easily flattened, thus increasing the adhesive force to the first electrode plate 1 or the second electrode plate 2, shortening the compounding time, and improving the compounding efficiency.

In some embodiments, the second compounding step is performed between the first compounding step and the bending step, the second compounding step forms a second composite electrode plate, and the second composite electrode plate is bent to form the at least one bent portion S in the bending step.

In the second compounding step, the multiple first electrode plates 1 are compounded with the outermost two spacers 3 in the first composite electrode plate 10A, that is, the multiple first electrode plates 1 are alternately attached to the two spacers 3 on the outer sides. During the movement of the first composite electrode plate 10A in the unfolded state, for each first electrode plate 1 placed, pressure is applied to the first electrode plate 1 and the first composite electrode plate 10A through a roller to attach the first electrode plate 1 to the spacers 3 on the outer sides through bonding layers (such as PCS layers) of the spacers 3. For the spacer 3 on the same side, a blank region is left between every two adjacent first electrode plates 1. After forming the second composite electrode plate, the second composite electrode plate is bent. The process of bending the second composite electrode plate is equivalent to bending the first composite electrode plate.

In this embodiment, the first electrode plate 1 is attached to the first composite electrode plate 10A and then bent, which is suitable for the situation where the composite electrode plate can be freely stacked by its own weight to form the electrode assembly 10. This forming method can easily ensure the position of the first electrode plate 1, thus improving the accuracy of the position of each layer of electrode plates, and improving the performance of the electrode assembly 10.

In some embodiments, the second compounding step and the bending step are performed simultaneously, and the multiple first electrode plates 1 are inserted between two adjacent straight sections S1 of each bent portion S in the bending process of the first composite electrode plate 10A.

After all first electrode plates 1 are inserted, pressure may be applied to the electrode assembly 10 along the stacking direction Z to attach the multiple first electrode plates 1 to the spacers 3 on the outer sides through bonding layers (such as PCS layers) of the spacers 3, in order to maintain the position between adjacent electrode plates and prevent displacement between adjacent layers of electrode plates, thus improving the performance of the electrode assembly 10.

In this embodiment, during the process of stacking the first composite electrode plate 10A, the sucked first electrode plates 1 are alternately inserted between every two adjacent straight sections S1 of each bent portion S, which is suitable for the situation where the composite electrode plate is alternately folded left and right by a pressure cutter.

While the present application has been described with reference to the preferred embodiments, various improvements may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather comprises all technical solutions falling within the scope of the claims.

## Claims

1. An electrode assembly (10), comprising:
a first electrode plate (1); and
at least two second electrode plates (2) stacked and bent to form at least one bent portion (S), the bent portion (S) comprising at least one bent section (S2) and at least two straight sections (S1), two adjacent straight sections (S1) being connected through the bent section (S2),
wherein for each bent portion (S), the first electrode plate (1) is provided between two adjacent straight sections (S1), and the polarity of the first electrode plate (1) is opposite to the polarities of the adjacent second electrode plates (2).

2. The electrode assembly (10) according to claim 1, further comprising at least three spacers (3) stacked and bent together with the at least two second electrode plates (2) to form the at least one bent portion (S).

3. The electrode assembly (10) according to claim 2, wherein at least one of the second electrode plates (2) and the spacers (3) is continuous.

4. The electrode assembly (10) according to claim 2 or 3, wherein the second electrode plates (2) and the spacers (3) are continuous.

5. The electrode assembly (10) according to any one of claims 2 to 4, wherein the second electrode plate (2) is provided between every two adjacent spacers (3).

6. The electrode assembly (10) according to any one of claims 2 to 5, wherein:
each spacer (3) is provided with a bonding layer, and the first electrode plate (1) is attached to the spacer (3) located on an outer side of the at least three spacers (3) through the bonding layer; and/or
the second electrode plate (2) is attached to the spacer (3) through the bonding layer.

7. The electrode assembly (10) according to any one of claims 1 to 6, wherein the polarities of every two adjacent second electrode plates (2) are opposite.

8. The electrode assembly (10) according to claim 7, wherein the number of the second electrode plates (2) is even, the number of the second electrode plates (2) with a first polarity is equal to the number of the second electrode plates (2) with a second polarity, and the first polarity is opposite to the second polarity.

9. The electrode assembly (10) according to claim 8, wherein a plurality of first electrode plates (1) are provided, the plurality of first electrode plates (1) have a first polarity and a second polarity, and the plurality of first electrode plates (1) with the first polarity and the second polarity are alternately arranged along a stacking direction (Z) of at least two straight sections (S1).

10. The electrode assembly (10) according to claim 7, wherein the number of the second electrode plates (2) is odd, the number of the second electrode plates (2) with a first polarity is greater than the number of the second electrode plates (2) with a second polarity, a plurality of first electrode plates (1) are provided, and the plurality of first electrode plates (1) all have the second polarity.

11. The electrode assembly (10) according to any one of claims 1 to 10, wherein an end portion of the first electrode plate (1) along an opening direction (X) of the bent portion (S) does not exceed the straight sections (S1).

12. The electrode assembly (10) according to any one of claims 1 to 11, wherein at least one of the second electrode plates (2) is provided with a material removal region (23) at the bent section (S2), and the material removal region (23) extends along a width direction (Y) of the second electrode plate (2).

13. The electrode assembly (10) according to claim 12, wherein at least three second electrode plates (2) are provided, and the material removal region (23) is arranged on the second electrode plate (2) sandwiched between inner sides.

14. The electrode assembly (10) according to claim 12, wherein the material removal region (23) comprises grooves (231), and the grooves (231) extend along the width direction (Y).

15. The electrode assembly (10) according to claim 14, wherein two sides of the second electrode plate (2) are provided with the grooves (231) opposite to each other.

16. The electrode assembly (10) according to claim 14 or 15, wherein the second electrode plate (2) comprises a second current collector (21) and a second active material layer (22), the second active material layer (22) is arranged on the second current collector (21), the second active material layer (22) comprises a plurality of active material regions (221) spaced apart, and the grooves (231) are formed between every two adjacent active material regions (221).

17. The electrode assembly (10) according to any one of claims 12 to 16, wherein the material removal region (23) comprises a plurality of through holes (232), and the plurality of through holes (232) are spaced apart along the width direction (Y).

18. The electrode assembly (10) according to any one of claims 12 to 17, wherein the second electrode plate (2) with the material removal region (23) is a positive electrode plate.

19. A battery cell (100), comprising the electrode assembly (10) according to any one of claims 1 to 18.

20. A battery (200), comprising the battery cell (100) according to claim 19.

21. An electrical apparatus, comprising the battery cell (100) according to claim 19 and/or the battery (200) according to claim 20, configured to supply electric energy for the electrical apparatus.

22. A manufacturing method of an electrode assembly (10), comprising:
a first compounding step: compounding at least two second electrode plates (2) with at least three spacers (3) to form a first composite electrode plate (10A);
a second compounding step: respectively compounding a plurality of first electrode plates (1) with the outermost two spacers (3) in the first composite electrode plate (10A), wherein a polarity of each of the first electrode plates (1) is opposite to polarities of the adjacent second electrode plates (2); and
a bending step: bending the first composite electrode plate (10A) to form at least one bent portion (S), wherein the bent portion (S) comprises at least one bent section (S2) and at least two straight sections (S1), two adjacent straight sections (S1) are connected through the bent section (S2), and each of the first electrode plates (1) is provided between the two adjacent straight sections (S1).

23. The manufacturing method according to claim 22, wherein the first compounding step and the second compounding step are both performed through heating.

24. The manufacturing method according to claim 22 or 23, wherein the second compounding step is performed between the first compounding step and the bending step, the second compounding step forms a second composite electrode plate, and the second composite electrode plate is bent to form the at least one bent portion (S) in the bending step.

25. The manufacturing method according to claim 22 or 23, wherein the second compounding step and the bending step are performed simultaneously, and the plurality of first electrode plates (1) are inserted between two adjacent straight sections (S1) of each bent portion (S) in a bending process of the first composite electrode plate.
